# EUROPÄISCHE PATENTSCHRIFT

(11) **EP 0 989 307 B1**
(45) Veröffentlichungstag und Bekanntmachung des Hinweises auf die Patenterteilung: **29.06.2005**
(21) Anmeldenummer: 98810966.6
(22) Anmeldetag: 24.09.1998
(51) Int. Cl.: F04F 5/08, F02C 3/00, F28F 1/40

(54) **Strömungskanal zum Durchtritt einer Zwei-Phasen Strömung**
Flow channel for two-phase flow
Canal d'écoulement pour fluide biphasique

(43) Veröffentlichungstag der Anmeldung: 29.03.2000
(73) Patentinhaber: ALSTOM Technology Ltd, 5400 Baden (CH)
(72) Erfinder: Keller, Jakob, Prof. Dr., 5610 Wohlen (CH)

(56) Entgegenhaltungen:
- DE-A- 4 443 222
- DE-C- 170 193
- US-A- 2 077 482
- US-A- 4 574 643
- US-A- 5 803 165

## Beschreibung

### Technisches Gebiet

Die Erfindung bezieht sich auf einen Strömungskanal zum Durchtritt einer Zweiphasenströmung, die eine flüssige und eine gasförmige Phase aufweist, mit einer die Zweiphasenströmung radial zur Strömungsrichtung vollständig umschließenden Innenwand.

### Stand der Technik

Zweiphasenströmungen sind Massenströme, die aus zwei unterschiedlichen Stoffströmen zusammengesetzt sind, beispielsweise ein Gemisch aus einer Flüssigkeit und einem Gas. Derartige Zweiphasenströmungen spielen beispielsweise bei der Kompression von Luft, die in komprimierter Form einer Energieerzeugungsanlage zugeführt wird, eine bedeutende Rolle. So sind Überlegungen bekannt, die zur Versorgung von Gasturbinenanlagen mit vorkomprimierter Luft das Prinzip der isothermen Kompression nutzen, wie es beispielsweise aus der US-Druckschrift US 4 797 563 hervorgeht.

Im vorstehend beschriebenen Fall wird ein Luft-Wasser-Gemisch längs einer Gefällstrecke beschleunigt und anschließend in eine Druckkammer geleitet. Weiterentwicklungen sehen hierzu vor, die beschleunigte Zweiphasenströmung zu Zwecken der Verdichtung in eine Düsenanordnung einzuleiten, beispielsweise in eine Laval-Düse, innerhalb der dem Zweiphasengemisch gezielt kinetische Energie entzogen wird, bei gleichzeitiger Kompression der in dem Gemisch enthaltenen Luft. Es konnte gezeigt werden, daß die Wahl der Tröpfchengröße der in dem Wasser-Luft-Gemisch enthaltenen Wassertropfen entscheidenden Einfluß auf den Wirkungsgrad der Düse hinsichtlich ihrer Verdichtungseigenschaften besitzt.

Jedoch sind bislang keine genaueren Untersuchungen hinsichtlich der die Zweiphasenströmung umschließenden Strömungskanalwand angestellt worden. Insbesondere könnten hierbei genauere Kenntnisse über das Grenzschichtverhalten zwischen der Zweiphasenströmung und der Strömungskanalwand entscheidend zu Verbesserungen in Bezug auf die Vermeidung von Strömungsverlusten aufgrund von Reibung sowie auch dem Auftreten von Phasenseparationen beitragen, wodurch der Wirkungsgrad eines Strömungskanals, insbesondere einer Zweiphasenlavaldüse erheblich verbessert werden könnte.

Einige interessante Aspekte des Strömungsverhaltens einer Zweiphasenströmung durch einen Strömungskanal können den nachfolgenden Beiträgen entnommen werden:
I. M.R. Wang and D.Y. Huang, Droplet dispersion and ejection process in two-phase boundary layer, AIAA Journal 32 (11), 2217 (1994).
II. Y. Tsuji and Y. Morikawa, LDV measurements of an air-solid two-phase flow in a horizontal pipe, J. Fluid Mech. 120, 385 (1982).
III. Y. Tsuji, Y. Morikawa and H. Shiomi, LDV measurements of an air-solid two-phase flow in a vertical pipe, J. Fluid Mech. 139, 417 (1984).

Dem Beitrag von Wang und Huang ist zu entnehmen, daß der Impulsaustausch zwischen einer Strömung und einer die Strömung umgebenden Wand erhöht werden kann, sofern die Strömung Tröpfchen enthält. Dabei ist bemerkenswert, daß die Tröpfchendichte innerhalb der Grenzschicht zur Wandoberfläche gerichtet, linear auf den Wert 0 abnimmt, unabhängig von der Größe der jeweiligen in der Strömung vorhandenen Tröpfchen. So ist es auch bemerkenswert, daß ein Aerosol mit einem Wasser-Luft-Gemisch-Verhältnis von etwa 0,005 in etwa die doppelte Wand-Schubkraft hervorruft, als es bei einer Grenzschicht, die aus reiner Luft besteht, der Fall ist. So bestätigen auch die vorstehend genannten Beiträge von Tsuji und Morikawa eine bestehende Proportionalität zwischen der Zunahme der Wand-Schubkraft eines, entlang einer Wand strömenden Massenstromes und dem Wasser-Luft-Massenverhältnisses. Grundsätzlich gilt, daß die sich entlang einer Wand ausbildende Grenzschicht bei einem zunehmenden Wasser-Luft-Massenverhältnis innerhalb des den Strömungskanal durchströmenden Massenstromes reicher an Wassertröpfchen wird.

Der Impulsübertrag auf die, von einem Massenstrom überströmte Wand bestimmt im wesentlichen die Tendenz einer Zweiphasenströmung sich zumindest im Bereich der Grenzschicht in zwei unterschiedliche Phasen zu separieren.

Insbesondere beim Durchströmen einer Zweiphasenströmung durch eine Lavaldüse, die einen großen Druckgradienten innerhalb der Strömung entlang der Strömungsrichtung bewirkt, ist eine Phasenseparierung unerwünscht, so daß der Impulsübertrag auf die Wand ausreichend klein ausgebildet sein muß. Auf der anderen Seite trägt ein sehr hoher Impulsübertrag und damit verbunden eine hohe Wand-Schubkraft zu Energieverlusten innerhalb des die Düsenanordnung durchströmenden Massenstromes bei, der den Wirkungsgrad der Lavaldüse erheblich herabsetzt.

Es ist an sich bekannt, die Innenwände von Strömungskanälen für ein- oder mehrphasige Fluidströmungen mit erhabenen, rippenartigen Konturen zum Zwekke einer Strömungsbeeinflussung auszustatten.

So offenbart US 5803165 einen Wärmeübertrager, welcher mit einer Vielzahl von Wärmeübertragungsrohren ausgerüstet ist, über deren Innenwände sich in Strömungsrichtung rippenartige Konturen erstrecken. Die Rippen dienen in diesem Falle einer Intensivierung der Wärmeübertragung.
US 4574643 hat eine Vorrichtung zur Durchflussmessung bei Zweiphasenströmungen, insbesondere zur Überwachung von Nassdampfströmungen, zum Gegenstand. Hierbei ist die Innenwand eines rohrförmigen Strömungskanals mit einer schraubenlinienförmig verlaufenden erhabenen Kontur ausgerüstet. Der Zweck dieser schraubenlinienförmigen Rippe besteht darin, der Zweiphasenströmung einen Drall aufzuzwingen und damit einen Separationseffekt in eine äussere flüssige und eine innere gasförmige Phase zu erreichen.

### Darstellung der Erfindung

Der Erfindung liegt die Aufgabe zugrunde, Strömungsverluste einer Zweiphasenströmung durch einen Strömungskanal entscheidend zu reduzieren, ohne dabei die vorstehend genannten Separationseffekte, die in Wandnähe zu einer Phasentrennung führen, zu erleiden. Insbesondere soll der Wirkungsgrad einer Lavaldüse, durch die ein Zweiphasengemisch hindurchtritt, durch Reduzierung von Wandströmungsverlusten gesteigert werden. Der Einsatz derartiger Zweiphasentavaldüsen dient insbesondere der isothermen Kompression von Luft, die vorzugsweise einer nachgeschalteten Energieerzeugungseinheit, beispielsweise einer Gasturbine, zugeführt wird. Die erfindungsgemäßen Maßnahmen sollen daher auch letztlich der Wirkungsgradsteigerung der gesamten Gasturbinenanlage dienen.

Die Lösung der der Erfindung zugrundeliegenden Aufgabe ist im unabhängigen Anspruch angegeben. Den Erfindungsgedanken vorteilhaft weiterbildende Maßnahmen sind Gegenstand der abhängigen Ansprüche.

Die der Erfindung zugrundeliegende Idee entlehnt sich dem Prinzip, mit dem sich Tragflügelboote oder Luftkissenboote, sogenannte Hoovercrafts, fortbewegen.

Der Grund für die hohen erreichbaren Geschwindigkeiten derartiger Fortbewegungsmittel liegt in der nur geringen Benetzungsfläche des Bootskörpers mit der dichteren Phase, sprich Wasser, der zwischen dem Bootskörper und der Wasseroberfläche hindurchtretenden Zweiphasenströmung.

Erfindungsgemäß ist ein Strömungskanal zum Durchtritt einer Zweiphasenströmung, die eine flüssige und eine gasförmige Phase aufweist, mit einer die Zweiphasenströmung radial zur Strömungsrichtung vollständig umschließenden Innenwand, derart ausgebildet, daß an der Innenwand des Strömungskanals erhabene, rippenartig ausgebildete Konturen vorgesehen sind, die im wesentlichen senkrecht zur Strömungsrichtung und parallel zueinander, in Strömungsrichtung voneinander beabstandet an der Innenwand angebracht sind.
Die an der Innenwand des Strömungskanals ausgebildeten Rippenzüge schliessen zwischen zwei unmittelbar benachbarten Rippenzügen jeweils einen zum Innenraum des Strömungskanals hin offenen Zwischenraum ein. Durch das Vorsehen derartiger Konturen an der Innenwand eines Strömungskanals bzw. bevorzugt an der Innenwand einer Lavaldüse, wird nicht die gesamte Oberfläche der Strömungskanalinnenwand mit der dichteren Phase der Zweiphasenströmung, also vorzugsweise dem Wasser, benetzt, zumal sich in den Zwischenräumen jeweils zweier unmittelbar benachbarter Rippenzüge Luftwirbel ausbilden, die in die Zwischenräume eingetretene Flüssigkeitströpfchen regelrecht aus den Zwischenräumen wieder herausspülen. Hierdurch wird zumindest die zwischen zwei Rippenzügen vorgesehene Strömungskanalinnenwand nicht, oder zumindest nur in einem sehr geringen Anteil, mit der Flüssigkeit benetzt.

Es ist zu bemerken, daß das Vorsehen der erfindungsgemäßen Rippenzüge innerhalb eines Strömungskanals keine geeignete Lösung zur Reduzierung von Strömungsverlusten für eine Einphasenströmung darstellt, zumal der Impulsübertrag über die Grenzschicht hinweg vom Hauptströmungsfluß in den Zwischenraum zwischen zwei benachbarten Rippenzügen um vieles größer ist, verglichen mit einer Zweiphasenströmung. Vielmehr würden sich bei einer Einphasenströmung in den Zwischenräumen starke Wirbel ausbilden, die sogar zu einem erhöhten Strömungsverlust durch den Strömungskanal beitragen.

Anders sieht es im Falle einer Zweiphasenströmung aus, bei der sich beide Phasen stark in ihrer spezifischen Dichte unterscheiden. Im Falle einer Zweiphasenströmung kann die durch den Luftanteil innerhalb der Zwischenräume auftretende Schubbeanspruchung weitgehend vernachlässigt werden, verglichen mit einer Oberflächen-Schubkraft, die von Wasser auf eine glatt ausgebildete Innenwand eines Strömungskanals hervorgerufen würde. Aus diesem Grunde ist es besonders vorteilhaft, daß bei einer Zweiphasenströmung durch einen Strömungskanal die von dem Wasser benetzte Oberfläche der Strömungskanalinnenwand möglichst reduziert wird.

In einer besonders vorteilhaft ausgeführten Ausbildungsform weisen die rippenartig ausgebildeten Konturen an ihren der Zweiphasenströmung ausgesetzten Enden profilierte Berührflächen auf, die derart ausgebildet sind, daß die Zweiphasenströmung weitgehend tangential die Berührflächen überströmt. Durch eine derartige Profilierung wird insbesondere die im Strömungskanal geführte Zweiphasenströmung möglichst ohne große Wand-Reibungsverluste geführt. Überdies bilden sich unter Verwendung einer derartigen Rippenprofilierung im Zwischenraum zweier benachbarter Rippenzüge weitgehendst gleichmäßig rotierende Wirbel aus, die zum vorstehend genannten Effekt der Freispülung der Zwischenräume von Flüssigkeitströpfchen, die in die Zwischenräume gelangt sind, beitragen.

### Kurze Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1a: Ausschnitt aus einer Längsschnittdarstellung durch einen erfindungsgemäß ausgebildeten Strömungskanal,
- Fig. 1b: vergrößerte Längsschnittdarstellung wie in Fig. 1b, sowie
- Fig. 2: Diagrammdarstellung zur Darstellung der Abhängigkeit zwischen dem Oberflächenanteil, der mit Flüssigkeit benetzt ist ( epsilon ) und dem Druckbeiwert (lambda) eines Rohres. Dabei wurde ein Rippenabstand von 5 cm, eine Wasserströmungsgeschwindigkeit von 100 m/s und ein Druck von 98 kPa zu Grunde gelegt.

### Wege für eine Ausführungsform und gewerbliche Anwendbarkeit

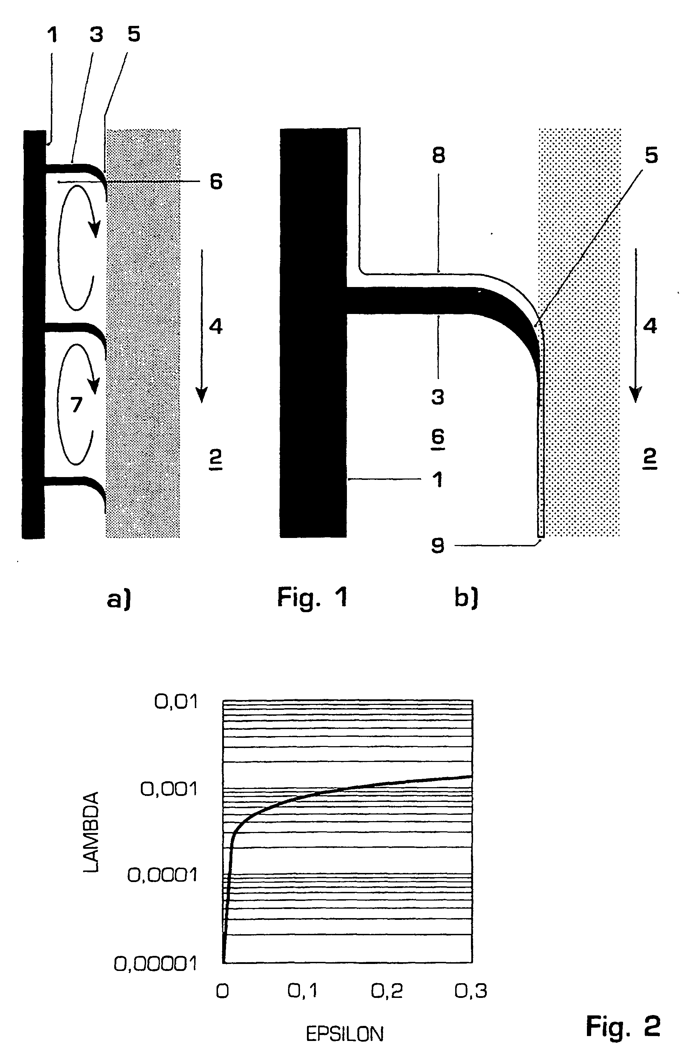

In Fig. 1 ist eine bevorzugte Ausführungsform in Längsschnittdarstellung durch einen erfindungsgemäß ausgebildeten Strömungskanal 2 dargestellt. An der Innenwand 1 des Strömungskanals 2 sind weitgehend senkrecht zur Innenwand 1 erhabene Konturen 3 vorgesehen, die in das Innere des Strömungskanals 2 hineinragen. Die Innenwand 1 soll den Strömungskanal 2 vollständig, vorzugsweise ringförmig, umschließen, so daß die Konturen 3 ebenfalls in sich geschlossen verlaufen und eine im Strömungskanal 2 vorgesehene Zweiphasenströmung 4 (siehe Strömungspfeil) vollständig umschließen.

In der Darstellung gemäß Fig. 1a durchströmt die Zweiphasenströmung 4 den Strömungskanal 2 von oben nach unten gemäß Pfeildarstellung.

Die der Strömung zugewandten Enden der Konturen 3 sind in Strömungsrichtung gleichmäßig verformt ausgebildet, so daß die Berührfläche 5 zwischen der Zweiphasenströmung und jeder einzelnen Kontur 3 möglichst klein gehalten werden kann. Insbesondere überstreift die Zweiphasenströmung 4 die profilierten Konturen 3 an ihren Berührflächen 5 jeweils tangential, so daß Reibungsverluste ebenso klein gehalten werden können. In den Zwischenräumen 6 zweier unmittelbar benachbarter Rippenzüge 3 bilden sich bevorzugt Luftwirbel 7 aus, durch die mögliche in die Zwischenräume 6 gelangte Flüssigkeitspartikel aus den Zwischenräumen wieder in die Haupt-Zweiphasenströmung 4 zurückgeschleudert werden.

In Fig. 1b ist eine Detaildarstellung eines Innenwandabschnittes mit einer darauf angebrachten erhabenen Kontur 3 abgebildet. Die Zweiphasenströmung 4 durchströmt den Strömungskanal 2 aufgrund der Rippenzüge 3 beabstandet von der Innenwand 1 und tritt im wesentlichen lediglich nur über die Berührfläche 5 mit der Innenwand des Strömungskanals in Kontakt.

Die in der dargestellten Weise geformten Rippenzüge 3 können vorzugsweise zusätzlich an ihrer, der Zweiphasenströmung zugewandten Seite mit einem Wasserfilm 8 überzogen sein, wodurch im Bereich der Berührfläche 5 die Strömungsverluste weiter herabgesetzt werden können. Insbesondere bildet sich in der strichliert dargestellten Strömungsebene eine Grenzschicht 9 aus, die als Scher- bzw. Trennschicht zwischen der Zweiphasenströmung 4 und den Zwischenräumen 6 dient.

Untersuchungen haben ergeben, daß die Höhe der Rippen 3 jeweils kleiner zu bemessen ist, als ihr gegenseitiger Abstand, der durch die Zwischenräume 6 definiert ist. So liegen typische Abstände zwischen zwei benachbarten Rippen 3 bei etwa 5 cm.

Untersuchungen haben ergeben, daß Strömungsverluste beim Durchströmen einer Zweiphasenströmung durch eine Lavaldüse minimiert werden können, indem die Berührfläche und somit die entsprechende Ausbildung der oberen Enden der Rippenzüge derart geformt sind, daß die Zweiphasenströmung über eine möglichst geringe Kontaktfläche mit den Rippenstücken in Kontakt tritt. Meßergebnisse haben bereits gezeigt, daß das erfindungsgemäße Vorsehen von erhabenen Konturen an der Innenwand einer Lavaldüse insbesondere im Eingangsbereich, in dem die turbulente Grenzschicht an der Wand, verglichen mit dem Radius der Lavaldüse, sehr klein ausgebildet ist, die vorhandenen Druckverluste um eine ganze Größenordnung zu reduzieren vermag. Auch im Bereich der Lavaldüse, in der sich die Zweiphasenströmung vollständig im Strömungskanal ausbreitet, können die erfindungsgemäßen Maßnahmen die Strömungsverluste um etwa einen Faktor 2 reduzieren. Diese Ergebnisse wurden bei Zweiphasenströmungen mit Reynolds-Zahlen, bei Temperaturen und Druckverhältnissen gewonnen, die typisch für Lavaldüsen sind, durch die Luft isotherm komprimiert wird, um nachfolgend für den Betrieb einer Gasturbine zur Verfügung zu stehen.

### Bezugszeichenliste

- 1: Innenwand
- 2: Strömungskanal
- 3: erhabene Konturen, Rippen
- 4: Zweiphasenströmung
- 5: Berührfläche
- 6: Zwischenraum
- 7: Luftwirbel
- 8: Wasserfilm
- 9: Grenzschicht

## Patentansprüche

1. Strömungskanal (2) zum Durchtritt einer Zweiphasenströmung (4), die eine flüssige und eine gasförmige Phase aufweist, mit einer die Zweiphasenströmung radial zur Strömungsrichtung vollständig umschließenden Innenwand (1), wobei an der Innenwand (1) des Strömungskanals (2) erhabene, rippenartig ausgebildete Konturen (3) vorgesehen sind, **dadurch gekennzeichnet, dass** die rippenartig ausgebildeten Konturen (3)
- im wesentlichen senkrecht zur Strömungsrichtung an der Innenwand (1) angebracht und in Strömungsrichtung voneinander beabstandet sind,
- parallel zueinander verlaufen, und
- an der Innenwand (1) des Strömungskanals (2) in sich geschlossen verlaufen, so daß sie die Zweiphasenströmung (4) vollständig umschließen.

2. Strömungskanal nach Anspruch 1, **dadurch gekennzeichnet, daß** die Konturen (3) jeweils eine von der Innenwand (1) des Strömungskanals (2) beabstandete Berührfläche (5) aufweisen, an der die Zweiphasenströmung (4) anliegt.

3. Strömungskanal nach Anspruch 2, **dadurch gekennzeichnet, daß** die Konturen (3) wenigstens im Bereich ihrer Berührflächen (5) ein in Strömungsrichtung geformtes Profil aufweisen, so daß die Zweiphasenströmung (2) weitgehend tangential die Berührflächen (5) überströmt.

4. Strömungskanal nach Anspruch 1, **dadurch gekennzeichnet, daß** die Konturen (3) wenigstens an ihrer der Zweiphasenströmung (4) zugewandten Seite mit Flüssigkeit benetzbar sind.

5. Strömungskanal nach Anspruch 1, **dadurch gekennzeichnet, daß** die Höhe der Konturen (3) kleiner als ihr gegenseitiger Abstand ist.

6. Strömungskanal nach Anspruch 1, **dadurch gekennzeichnet, daß** der gegenseitige Abstand im cm-Bereich liegt, typischerweise ca. 5 cm beträgt.

7. Strömungskanal nach Anspruch 1, **dadurch gekennzeichnet, daß** der Strömungskanal (2) eine Verdichterstufe, bspw. für eine Gasturbinenanlage ist.

8. Strömungskanal nach Anspruch 1, **dadurch gekennzeichnet, daß** der Strömungskanal (2) eine Zweiphasenlavaldüse ist.

## Claims

1. Flow duct (2) for the passage of a two-phase flow (4) which has a liquid and a gaseous phase, comprising an inner wall (1) completely enclosing the two-phase flow radially to the direction of flow, wherein raised contours (3) of rib-like design are provided on the inner wall (1) of the flow duct (2), **characterized in that** the contours (3) of rib-like design
- are attached to the inner wall (1) essentially perpendicularly to the direction of flow and are at a distance from one another in the direction of flow,
- run parallel to one another and
- run on the inner wall (1) of the flow duct (2) so as to be closed upon themselves, so that they completely enclose the two-phase flow (4).

2. Flow duct according to Claim 1, **characterized in that** the contours (3) each have a contact surface (5), which is at a distance from the inner wall (1) of the flow duct (2) and against which the two-phase flow (4) bears.

3. Flow duct according to Claim 2, **characterized in that** the contours (3), at least in the region of their contact surfaces (5), have a profile formed in the direction of flow, so that the two-phase flow (2) flows over the contact surfaces (5) largely tangentially.

4. Flow duct according to Claim 1, **characterized in that** the contours (3) can be wetted with liquid at least on their side facing the two-phase flow (4).

5. Flow duct according to Claim 1, **characterized in that** the height of the contours (3) is less than their mutual spacing.

6. Flow duct according to Claim 1, **characterized in that** the mutual spacing lies within the cm range, typically about 5 cm.

7. Flow duct according to Claim 1, **characterized in that** the flow duct (2) is a compressor stage, for example for a gas-turbine plant.

8. Flow duct according to Claim 1, **characterized in that** the flow duct (2) is a two-phase Laval nozzle.

## Revendications

1. Canal d'écoulement (2) pour le passage d'un écoulement biphasique (4), qui présente une phase liquide et une phase gazeuse, avec une paroi interne (1) entourant complètement l'écoulement biphasique radialement par rapport à la direction de l'écoulement, des contours (3) rehaussés, de type nervures, étant prévus sur la paroi interne (1) du canal d'écoulement (2), **caractérisé en ce que** les contours de type nervures (3)
- sont prévus essentiellement perpendiculairement à la direction de l'écoulement sur la paroi interne (1) et sont espacés les uns des autres dans la direction de l'écoulement,
- s'étendent parallèlement les uns aux autres et
- s'étendent de manière fermée sur eux-mêmes sur la paroi interne (1) du canal d'écoulement (2) de telle sorte qu'ils entourent complètement l'écoulement biphasique (4).

2. Canal d'écoulement selon la revendication 1, **caractérisé en ce que** les contours (3) présentent à chaque fois une surface de contact (5) espacée de la paroi interne (1) du canal d'écoulement (2), contre laquelle s'applique l'écoulement biphasique (4).

3. Canal d'écoulement selon la revendication 2, **caractérisé en ce que** les contours (3) présentent, au moins dans la région de leurs surfaces de contact (5), un profil façonné dans la direction de l'écoulement, de sorte que l'écoulement biphasique (4) s'écoule essentiellement tangentiellement sur les surfaces de contact (5).

4. Canal d'écoulement selon la revendication 1, **caractérisé en ce que** les contours (3) peuvent être mouillés de fluide au moins sur leur côté tourné vers l'écoulement biphasique (4).

5. Canal d'écoulement selon la revendication 1, **caractérisé en ce que** la hauteur des contours (3) est inférieure à leur écartement mutuel.

6. Canal d'écoulement selon la revendication 1, **caractérisé en ce que** l'écartement mutuel est de l'ordre des cm, et vaut typiquement environ 5 cm.

7. Canal d'écoulement selon la revendication 1, **caractérisé en ce que** le canal d'écoulement (2) est un étage de compresseur, par exemple pour une installation de turbine à gaz.

8. Canal d'écoulement selon la revendication 1, **caractérisé en ce que** le canal d'écoulement (2) est une buse de Laval biphasique.
